Europäisches Patentamt

European Patent Office

Office européen des brevets

(19)

(11) Publication number: **0 241 717**
**A2**

(12) **EUROPEAN PATENT APPLICATION**

(21) Application number: **87103633.1**

(22) Date of filing: **13.03.87**

(51) Int. Cl.4: **G06F 15/20**

(30) Priority: **18.04.86 US 853490**

(43) Date of publication of application:
**21.10.87 Bulletin 87/43**

(84) Designated Contracting States:
**DE FR GB IT**

(71) Applicant: **International Business Machines
Corporation
Old Orchard Road
Armonk, N.Y. 10504(US)**

(72) Inventor: **Knystautas, Beverly Wingard
8614 Ridge Road
Bethesda Maryland 20817(US)**
Inventor: **Meredith, Scott Emery
7600 Carter Court
Bethesda Maryland 20817(US)**
Inventor: **Modlin, William David
401 Elm Street
Frederick Maryland 21701(US)**

(74) Representative: **Brügel, Gerhard, Dipl.-Ing.
IBM Deutschland GmbH Schönaicher
Strasse 220
D-7030 Böblingen(DE)**

(54) Linguistic analysis method and apparatus.

(57) A computer-based linguistic analysis method and apparatus is disclosed which includes a compilation of a classification table for all the words in a dictionary and the compilation of a plurality of inflection pattern tables, each inflection pattern table being referenced by a particular classification number which is output from the classification table. In operation, an input word can be applied to the classification table and the corresponding classification number for the input word identified. Thereafter, the classification number can be used to point to a particular inflection pattern table having the various inflected forms for the suffix or prefix of a word. When the particular inflection pattern table has been identified by its classification number, a matching operation is carried out between the input word and the ending forms or prefix forms which appear in the inflection pattern table. For example, if the inflection pattern table contains the various ending forms for the relatives of the input word, the matching operation compares from the back of the input word toward the front, the characters of the input word with the characters which appear in the various forms of the inflection pattern table. When a successful match is achieved, then the correct grammatical form for the input word is identified. In addition, the remaining portion of the input word exclusive of the matched ending portion found in the inflection pattern table, becomes the invariant root of the input word. The invariant root of the input word can be used to build the related forms of the input word by combining the invariant root with the various ending forms which appear in the inflection pattern table. This technique can be used to advantage in a variety of applications including standalone linguistic analysis, synonym generation, document classification and retrieval, grammar checking, parsing, and other linguistic applications. The invention can be applied to virtually any indo-European language.

*FIG. 1.*

FORMS FUNCTION

| | | |
|---|---|---|
| INPUT WORD | -- | CHOSEN BY THE USER |
| DICTIONARY | -- | FIND STEM # & ENDING # |
| CLASS TABLE | -- | FIND CLASS (ES) & SKIP COUNT(S) FOR THE INPUT WORD |
| ENDING TABLE(S) | -- | GET ALL BASE FORMS & POS FOR EACH CLASS ✷ ✷ ✷ |

>1 BASE FORM ? — YES → INTERMEDIARY SCREEN WITH ALL BASE FORMS → USER SELECTS ONE → DISPLAY ALL FORMS

NO ↓ DISPLAY ALL FORMS

✷✷✷ TO FIND BASE FORMS·
MATCH ENDINGS IN THE ENDING TABLE (S) IDENTIFIED BY THE
CLASS TABLE FOR A GIVEN WORD. WHEN AN ENDING MATCHES
(CONSIDERING SKIP COUNT), TAKE THE LEFTOVER FRONT PART OF
THE WORD (THE "STEM") AND ADD THE ENDING FOR THE FIRST
EXISTING FORM.

0 241 717

# LINGUISTIC ANALYSIS METHOD AND APPARATUS

## Background of the Invention

### 1. Technical Field

The invention disclosed broadly relates to computer methods and apparatus and more particularly relates to dictionary operations carried out by computer methods and apparatus.

### 2. Background Art

All Indo-European languages contain words which take various forms indicating their grammatical functions. Inflections are the variations in the word form which indicate the grammatical function of a word. The set of inflections attributable to a word can be termed the morphology of a word, that is the inflection pattern of the word. Various attempts have been made in the past to relate and identify words in a dictionary, using computer techniques. These prior art approaches have suffered from deficiencies such as a lack of bi-directionality. Bi-directionality is the capability of going from any form of a word to all other morphologically related forms of that word. For example, in one prior art computer technique for relating and identifying words, the function of relating words only goes from the base form of the word to the inflected forms. Thus, if the user has the inflected form of a word and wants to find a synonym for it, it is impossible since the route from the inflected form to the base form is not available in this prior art approach. Linguistic analysis has other applications besides synonym generation, for example document classification and retrieval, grammar checking, and standalone analysis. In many of these other applications, the need for bi-directional relation and identification of words is necessary and there is no satisfactory prior art computerized technique for accomplishing this. Another feature which is absent from many prior art computerized techniques for relating and identifying words is a suitable compaction of the data bases involved. Due to the limited amount of storage capacity in computer data base systems, some form of compaction is necessary in order to provide a comprehensive collection of words. This problem becomes acute with personal computer applications where the memory capacity is significantly less than that for "main frame" applications. Consistent with this consideration, the speed of searching the data base must be fast enough to be practical in real time interactive applications. Another basic approach in the prior art computer techniques for relating and identifying words is the use of algorithms which apply generalized inferences concerning the grammatical function of a word based upon its prefix or suffix. The problem with the algorithmic approach in the prior art is that most human languages have enough irregularities in the pattern of the prefix and suffix forms connected to the base word, so that the algorithmic approach generates errors in the linguistic analysis operation. In addition, the prior art has had significant problems in applying linguistic analysis across multiple human languages. Multilingual linguistic analysis has not been satisfactorily reduced to computer techniques in the prior art.

## Objects of the Invention

It is therefore an object of the invention to relate and identify all words in a dictionary, in an improved manner.

It is a further object of the invention to relate and identify all the words in a dictionary, using computer techniques, in an improved manner.

It is a further object of the invention to provide a computer technique for relating and identifying all the words in a dictionary, which is capable of bi-directionally relating the various forms of a word.

It is still a further object of the invention to provide a computer technique for relating and identifying all the words in a dictionary, having a more compact expression than has been available in the prior art.

It is still a further object of the invention to provide a computer technique for relating and identifying all the words in a dictionary, in a manner which groups the words in accordance with their morphological patterns.

It is still a further object of the invention to provide a computerized technique for relating and identifying all the words in a dictionary, which includes a more comprehensive collection of words than has been available in the prior art.

It is yet a further object of the invention to provide a computerized technique for relating and identifying all the words in a dictionary which provides an improved technique for relating and identifying the words by means of deterministic patterns.

It is yet an additional object of the invention to provide a computerized technique for relating and identifying all the words in a dictionary, for multilingual applications.

## Disclosure of the Invention

These and other objects, features and advantages of the invention are accomplished by the linguistic analysis method and apparatus invention which is disclosed herein. The invention is based, in part, on the compilation of a classification table for all the words in the dictionary and the compilation of a plurality of inflection pattern tables, each inflection pattern table being referenced by a particular classification number which is output from the classification table. In operation, an input word can be applied to the classification table and the corresponding classification number for the input word identified. Thereafter, the classification number can be used to point to a particular inflection pattern table having the various inflected forms for the suffix or prefix of a word. When the particular inflection pattern table has been identified by its classification number, a matching operation is carried out between the input word and the ending forms or prefix forms which appear in the inflection pattern table. For example, if the inflection pattern table contains the various ending forms for the relatives of the input word, the matching operation compares from the back of the input word toward the front, the characters of the input word with the characters which appear in the various forms of the inflection pattern table. When a successful match is achieved, then the correct grammatical form for the input word is identified. In addition, the remaining portion of the input word exclusive of the matched ending portion found in the inflection pattern table, becomes the invariant root of the input word. The invariant root of the input word can be used to build the related forms of the input word by combining the invariant root with the various ending forms which appear in the inflection pattern table. This technique can be used to advantage in a variety of applications including standalone linguistic analysis, synonym generation, document classification and retrieval, grammar checking, parsing, and other linguistic applications. The position of the matched form found in the inflection pattern table corresponds with the grammatical function of the word. The resulting linguistic analysis method and apparatus invention has the characteristics of relating and identifying all the words in a dictionary in a bi-directional manner, allowing the input word to be any form of the word and all of its related forms including the base form can be identified. The invention has the further characteristic of enabling a significant data compaction to be carried out by means of relating groups of words according to their similar morphological patterns. This achieves a significant reduction in the storage required for a dictionary of related words. Still further, because of the deterministic feature of grouping by patterns of inflected forms, no ambiguity results in the linguistic analysis operation. The feature of assigning a specific class to every word appearing in the dictionary results in no ambiguity in the linguistic analysis operation. Since one principle of operation of the invention is in the organization of groups of words into similar morphological patterns, the invention can be applied to virtually any indo-European language.

## Brief Description of the Drawings

The foregoing and other advantages of the invention will be more fully understood with reference to the description of the best mode and the drawing wherein:

Fig. 1 is a flow diagram of the steps taken in a generalized linguistic analysis application.

Fig. 2 is a flow diagram of a generalized linguistic analysis application illustrating a specific example.

Fig. 3 is a more detailed flow diagram of the invention.

Fig. 4 is a flow diagram illustrating the sequence of operational steps for synonym generation.

Fig. 5 is a flow diagram illustrating a specific example of synonym generation.

Fig. 6 is a flow diagram illustrating a second example.

Fig. 7 is a system architecture diagram of the invention.

<u>Related Patents</u>

The following patents are related to the invention disclosed herein and are assigned to the IBM Corporation. The disclosures in these related patents are incorporated herein by reference to provide background and support for the disclosure herein.

USP 4,342,085 entitled "Stem Processing for Data Reduction in a Dictionary Storage File;" USP 3,995,254 entitled "Digital Reference Matrix for Word Verification;" USP 4,028,677 entitled "Digital Reference Hyphenation Matrix Apparatus for Automatically Forming Hyphenated Words;" USP 4,355,371 entitled "Instantaneous Alpha Content Prescan Method for Automatic Spelling Error Correction;" USP 4,384,329 entitled "Retrieval of Related Linked Linguistic Expressions Including Synonyms and Antonyms;" USP 4,494,150 entitled "Word Autocorrelation Redundancy Match Facsimile Compression for Text Processing Systems;" USP 4,456,973 entitled "Automatic Text Grade Level Analyzer for a Text Processing System;" USP 4,499,499 entitled "Method for Identification and Compression of Facsimile Symbols in Text Processing Systems;" USP 4,358,824 entitled "Office Correspondence Storage and Retrieval System;" USP 4,328,561 entitled "Alpha Content Match Prescan Method for Automatic Spelling Error Correction;" USP 3,925,761 entitled "Binary Reference Matrix for a Character Recognition Machine;" USP 3,969,698 entitled "Cluster Storage Apparatus for Post Processing Error Correction of a Character Recognition Machine;" USP 3,969,700 entitled "Regional Context Maximum Likelihood Error Correction for OCR, Keyboard, and the Like;" USP 3,839,702 entitled "Bayesian Online Numeric Discriminant;" USP 3,842,402 entitled "Bayesian Online Numeric Discriminator;" USP 4,003,025 entitled "Alphabetic Character Word Upper/Lower Case Print Convention Apparatus and Method;" USP 3,988,715 entitled "Multi-Channel Recognition Discriminator;" USP 4,136,395 entitled "System for Automatically Proofreading a Document;" USP 4,092,729 entitled "Apparatus for Automatically Forming Hyphenated Words;" and USP 4,225,249 entitled "Variable Character Spacing Matrix for Proportional Spacing Printing Systems."

<u>Description of the Best Mode for Carrying Out the Invention</u>

Applications:

1. INDEPENDENT FUNCTION

This function will go from any form of any word to all forms. All words with variants (inflections) will be related. This varies for each language, but in general this includes verbs, nouns, adjectives, pronouns and adverbs. (In English, most adverbs have only one form, but there are a few exceptions like soon, sooner, soonest/ well, better, best/ early, earlier, earliest, etc.)

Words without inflected forms will be classified (and associated with "dummy classes") to provide part of speech information. ("Behind," for example, would have a class as a preposition --no inflections --as an adverb --no inflections --and as a noun (with the plural form "behinds" related).    I am behind in my work. (behind = adverb)

I looked behind the chest and found my pencil. (behind = preposition)

Mother is washing the baby's behind. (behind = noun)

The "forms function," as this system in its independent version will be called, will show all forms of any possible part of speech of a word.    Example: dove

I dove into the water.

The dove was sitting on my roof.

"Dove" could come from the verb "dive" (other related forms are dives and diving) or from the noun "dove" (other related form is "doves"). The function would show all forms of either base on request.

The function relates and identifies all words in the dictionary. It provides much more linguistic information than previously available. Before morphology, there was only hyphenation information, part of speech information and codes for verifying compound words in the Germanic languages. When the morphology is built into the dictionary one has have the following information for verbs:

(a) person and number:

1st person singular = I

2nd person singular = you

3rd person singular = he,she,it

1st person plural = we
2nd person plural = you
3rd person plural = they
    (b) tense:
e.g. "bring" in English
to bring - infinitive
I bring - present
I brought - past
I have brought - past participle
(In other languages there are more tenses built into the word, not formed by auxiliaries. I "would bring" is what is called a conditional tense, but in English it is shown with two words, while in French, for example, it is shown in one word: J'apporterais = I would bring.)
    (c) mode --e.g. subjunctive vs. indicative For nouns there is number information for English. One can associate and identify (whether singular or plural) words with irregular inflections.

Some words, like sheep, are the same in the singular or plural (and thus could take either a singular or plural verb). Many English nouns have irregular plurals ( mouse, mice/ addendum, addenda, etc.)

In the Romance languages (French, Spanish, Italian, Portuguese) one has gender information. If a word is feminine, it takes a feminine form of any adjective which modifies it, besides number information. In German there are masculine, feminine and also neuter genders and also cases (nominative, dative, genitive and accusative). Although in English, nouns have only two forms, in German, nouns have 17 forms. The system allows for as many forms as are needed for each part of speech for each language.

It also identifies words with alternate spellings, such as travelling or traveling. In Norwegian there are as many as six alternate spellings of some words.

The practical use of this function is to tell the user whether one says:    I have swum or I have swam, I have dreamed or I have dreamt or either. Is the plural "addendums" possible, or only "addenda?" Is it "bongoes" or "bongos?" "crescendoes" or "crescendos?" "afterlifes" or "afterlives?" "electrolysises" or "electrolyses?" Is the plural of "fish," "fishes" or "fish?" Is the plural of "loaf," "loafs" or "loaves?" (One says "he loafs(v) all day," but one cannot say "there are many loafs(n) of bread." Same with "leafs.")

The invention becomes even a more important aid for languages which have many forms of words. The function is a very useful tool for teaching or learning a language. Before the morphology feature of the invention, one knew that "buy" was a verb and one knew that "bought" was a verb, but one did not know they were related.

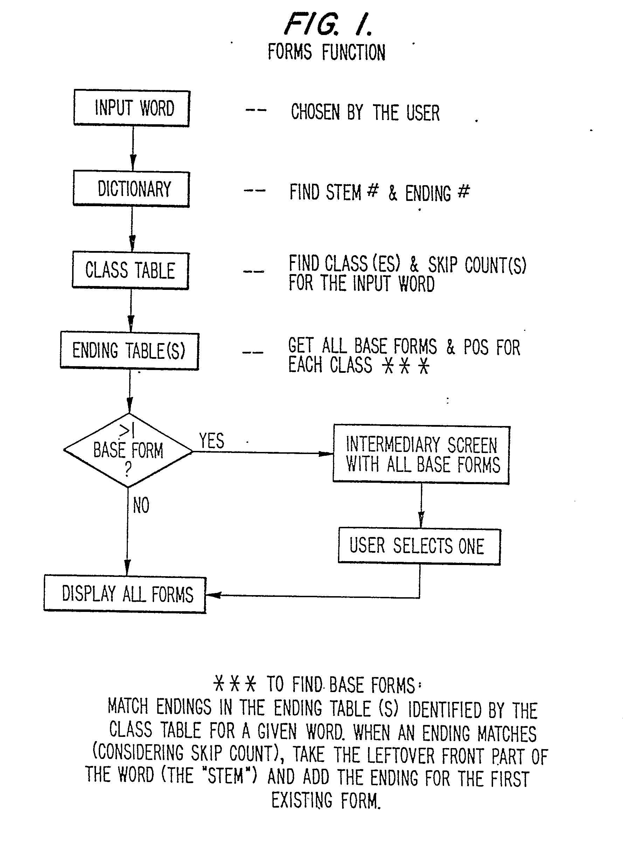

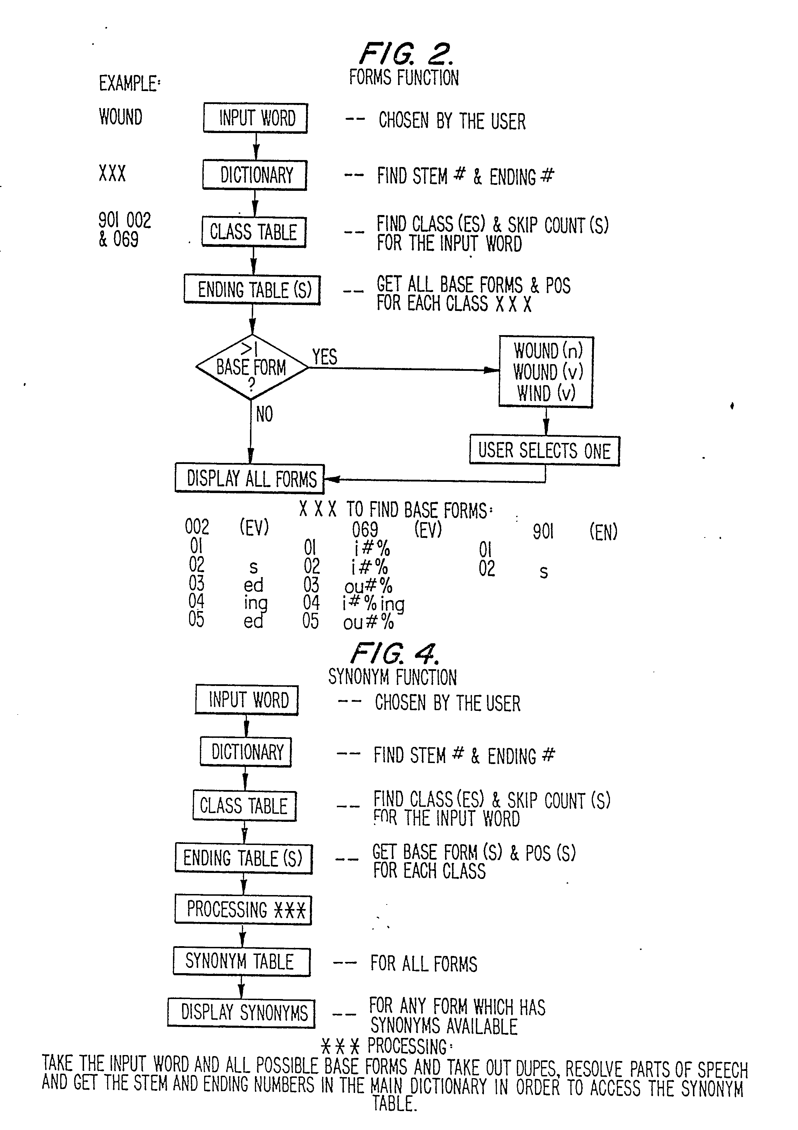

Prior art computer-based linguistic products only go from the infinitive to its forms (only one direction). In contrast, the invention can go from the infinitive to all forms and from any form to all the related forms. Prior art systems have the following disadvantages (some or all):
    (1) not bi-directional
    (2) not compact
    (3) not comprehensive
    (4) error prone
Systems that use algorithms to determine morphological information cannot deal with individual word particularities. Say if a noun ends in "f" the plural is formed by dropping the f and adding ves (as in elf J elves). But what about "beef" which has the two plural forms beefs or beeves. And irregularities such as criterion, criteria, bus with plurals buses or busses, biochemmistry with no plural form, bagful with the plurals bagsful or bagfuls. The inventive system is word specific and deals with all irregularities and peculiarities.
    (5) language dependent
The inventive system is very flexible and will work for all languages. Data has been prepared for French and Spanish and is being prepared for Italian, Norwegian, Swedish and German, and other languages will follow.
See Tables 1, 2 and 3 and the flow chart of Figs. 1 and 2 for the forms function.

FORMS FUNCTION

```
        input word              -- chosen by the user
            |
        dictionary*             -- find stem# & ending#
            |
        class table             -- find class(es) & skip count(s)
                                   for the input word
            |
        ending table(s)         -- get all base forms & POS for
                                   each class ***
            |
                              Y     intermediary screen
        >1 base form?      ------> with all base forms
                                            |
           |N
           |                        user selects one
           |                                |
        display all forms      <--------|
```

*    e.g., see USP 4,342,085 entitled "Stem Processing
     for Data
     Reduction in a Dictionary Storage File."

***  to find base forms:
     match endings in the ending table(s) identified
     by the class table for a given word.  When an
     ending matches (considering skip count), take the
     leftover front part of the word (the "stem") and
     add the ending for the first existing form.

TABLE 1

```
EXAMPLE:                  FORMS FUNCTION


wound      input word                  -- chosen by the user
             |
  xxx      dictionary                   -- find stem# & ending#
             |
  901 002  class table                  -- find class(es) & skip
  &069                                     count(s) for the input
                                           word
             |

           ending table(s)             -- get all base forms & POS
  (below)                                 for each class (Table 3)
             |
                                 Y       wound(n)
           >1 base form?    ------->  wound(v)
                                         wind(v)
                                           |
             |N
             |                         user selects one
                                           |
   display all forms               <--------
```

TABLE 2

```
to find base forms:

002 (EV)          069   (EV)       901   (EN)

01          01    i#%          01

02 s        02    i#%          02 s

03 ed       03    ou#%

04 ing      04    i#%ing

05 ed       05    ou#%
```

TABLE 3

For class 002, the only ending which matches with wound is the blank ending. So the stem is "wound." Add the first ending (blank) to the stem to get the base form "wound." The code EV indicates it is a verb.

For class 069, the ending ou#% matches with wound (since n is a consonant and d is a consonant. Now it is known for this word that # = n and % = d. Take off this ending and get the stem "w." Go to form 01 (which is in this case "ind" since it is known what # and % are now), and add the form 01 ending to the stem and get the base form "wind." The code EV indicates it is a verb.

For class 901, the only ending which matches with wound is the blank ending. So the stem is "wound." Add the first ending (blank) to the stem to get the base form "wound." The code EN indicates it is a noun. This gives the information for the intermediary screen. If the user selects the first base the system will show:

verb:
INFIN wound
PRESENT PARTICIPLE wounding
PAST PARTICIPLE wounded
PRESENT INDICATIVE
I wound
you wound
he, she ,it wounds
we wound
you wound
they wound
PAST
I wounded
you wounded
he, she, it wounded
we wounded
you wounded
they wounded

If the user selects the second base the system will show:
verb:
INFIN wind
PRESENT PARTICIPLE winding
PAST PARTICIPLE wound
PRESENT INDICATIVE
I wind
you wind
he, she, it winds
we wind
you wind
they wind
PAST
I wound

you wound
he, she, it wound
we wound
you wound
they wound
If the user selects the third base the system will show:
noun:
SINGULAR wound
PLURAL wounds

## PROCESS FLOW: ACCESSING THE MORPHOLOGICAL PARALLEL DATA BASE

### 1.1 Introduction

Many different applications will use the morphological data base for a variety of different purposes. The process description given here is intended to depict the internal operations that must be carried out to use the tables for any application. This functional description is based on the original implementation of the morphological table processing, to support synonyms and a word conjugation/declension analysis command. Other applications include grammatical parsers for European languages and a query synonym feature and key word document indexing function, among many others.

### 1.2 Processing

For the purposes of this discussion, consider the operations required to support the "forms" or word conjugation display function. This will show the typical processing on the tables, and this function exercises the full power of the system. In the "forms" function, aid is requested on a single word in the text, which calls the dictionary processor to return all the conjugated forms of a verb, or all the declensions of a noun.
Example: —→ forms be
Requests an analysis of the English verb "be"
The result might be something like:
INFINITIVE: to be
PERFECT INFINITIVE: to have been
PRESENT PARTICIPLE: being
PAST PARTICIPLE: been

INDICATIVE MOOD:

PRESENT TENSE I am
you are
he (she,it) is
we are
you are
they are
PAST TENSE I was
you were
he (she,it) was
we were
you were
they were
PRESENT PERFECT I have been
you have been
he (she,it) has been
we have been

you have been

they have been

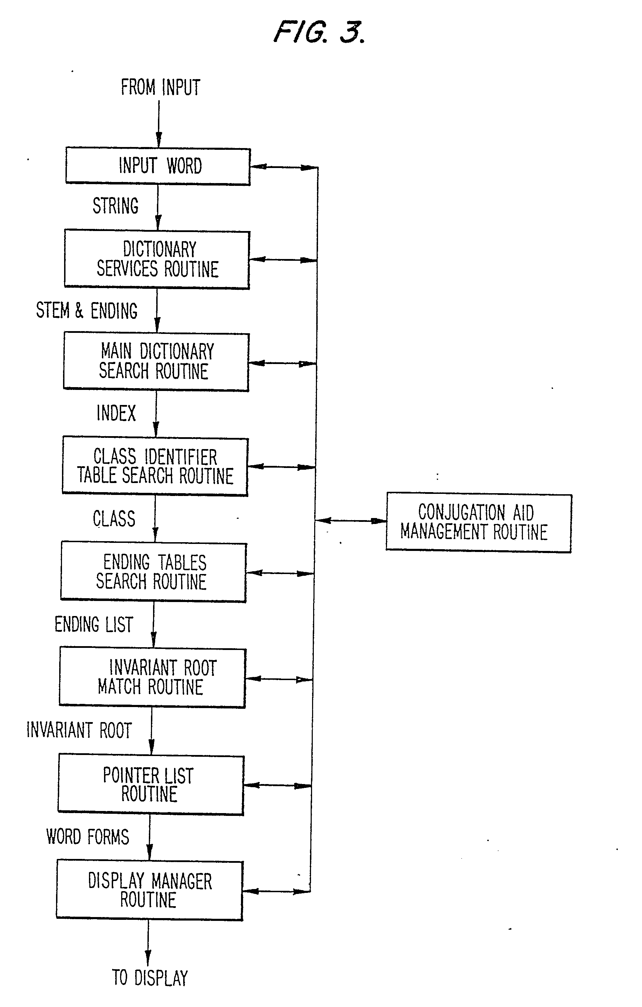

and so on, all tenses such as past perfect, future perfect, subjunctive and imperative moods, etc. The following steps are illustrated in Fig. 3.

Step 1: The word is passed to the dictionary services routine as a simple character string, along with its length.

Step 2: The conjugation aid subroutine is invoked. This routine is the high level manager of the whole process.

Step 3: The conjugation aid routine passes the word to the main dictionary search routine. The main dictionary search routine will search the main dictionary data base to verify that the word is "good," i.e. found in the dictionary. Assuming that the word is found, a special index number that uniquely identifies this particular word among the thousands of dictionary entry words is passed back to the conjugation aid routine. Of course, if the word does not verify in the main dictionary, the process terminates here for this invocation.

Step 4: The conjugation aid routine now invokes a routine that searches a table of class identifiers. This compact dictionary table contains a class identifier number or numbers for every word entry in the main dictionary. The class table search routine uses the input word's special index number as a search key into the class identifier table's index, to get the proper record number to start the search. Then, beginning at the first "nibble" or four-bit entry in that table record, the routine will step through the record and increment a count until the count matches the input word's main dictionary index number. This combination of direct random access to the proper record and sequential stepping through nibble data units insures the proper combination of fast access time and minimal table size.

Step 5: The conjugation aid routine can now use the class identifier number returned in Step 4 to access a separate table containing entries which define each possible class as a list of typical suffixes or endings of words, which are applied in the language to indicate tense, person, or number. Each part of speech (verb, noun, adjective, etc.) has a set of several of these classes or lists of typical endings. Using the class identifier number returned in Step 4, the ending tables search routine can search the ending tables index and directly access the proper class (reminder: a class is a set of typical "endings" or suffixes used to change the forms of words. In English, a verb class might contain endings such as -ed, -ing, -s, etc.).

Step 6: In this step, use the ending list to determine the invariant root of the word. This is done by matching the end of the input word with each ending in the list until the proper match is found. For example, the word "helping" would be matched with the endings -s, -ed, and fail until it was properly matched with -ing, and the invariant root returned would be "help."

Step 7: Each word in a given language is considered to have a "base word" and all the variations of the word used to indicate tense, person, number, etc. refer to this base. The invariant root returned in Step 6 may be the base, but in some cases a special ending must be added to the root returned in Step 6 to create the base. The ending list table for the class will indicate whether it is necessary to add an ending to the invariant root to obtain the base form or not. It is important to know the base form for functions like synonyms because synonym dictionaries contain entries for base forms only.

Step 8: After Step 6, the process is in a position to create all the forms of the word, including the base, by referring to a special list of ending pointers arranged by position. This pointer list is stored with the endings themselves. The pointers refer to the ending character strings used in Step 6, but now the endings will be used for a different purpose. Whereas in Step 6 the endings (like -ed, -s, -ing, etc.) were used to match the end of the input word and determine its invariant root, now (Step 8) they will be used to create all the forms of the input word, showing all possible variations for tense (past, future, present), person (first, second, third) and number (singular, plural). The pointer list is positionally arranged, so that the ending necessary to create the first form is referred to by the first pointer, the ending necessary to create the second form is referred to by the second pointer in the list, and so on. Once the ending referred to by a particular pointer is known, the form is created by simply adding that ending to the invariant root determined by Step 6. The "base" word referred to in Step 7 above is created in just this way. The first pointer in the pointer list refers to the ending necessary to create the first form, which is the base form. For a particular part of speech in a particular language the positions of the pointers in the list are invariant and give complete identification of forms. One of the special features of the system that makes it so valuable however is that for different languages the positions of the pointers can be defined differently to cover the special types of forms that occur in that language. For example, in an English verb class, the third pointer in the list might refer to the ending used for the first person past tense form, whereas in a French verb class the third pointer might refer to the ending used for the second person present tense form, and so on. The key idea is that uniform and generic code and table structure can handle all the form variations that these different languages present.

Step 9: The forms have all been created internally, and they can now be returned to the display manager.

Note: If more than one class identifier is returned for a word in Step 4 (for example: if the word "run" is input, a verb class identifier and a noun class identifier will be both be returned) then Steps 5 through 8 will be repeated for each class number returned.

1.3 Special Considerations and Features:

a) Default ending tables

Some of the class definition or "ending" tables within a given part of speech may be very similar, and only the endings for creating one or two forms may be different. The tables are built with the feature that if a given class is substantially similar to some other class, that other class is referred to and only the actual differences are specified. This is done to avoid having to duplicate endings, where they are the same. The mechanism used is described in the table structure documentation.

b) Skip count

The matching process within a class is sequential, that is, the first ending in the class will be matched against the input word, and if the match fails the second ending will be attempted, and so on. However, in some few cases a match may occur on some ending before the true ending that will provide a true invariant root. This is simply due to coincidental properties of the character strings that make up the ending lists. This may also occur due to merging of endings for several classes for compaction. The problem is solved by using a single bit in the class identifier entry table for each word (obtained in Step 4) to indicate whether or not a "premature" match will occur when this particular word is pushed through this particular ending list. If the bit is on, a count of the number of such premature mismatches is included with the class identifier number itself. An example has been designed to illustrate the process.

Example: Input word is "brillera" (French) In class 003, matches ending number 12 "lera" to give a root of "bril." However, the proper root (for adding endings to build all forms) is "brill." Therefore, a skip count of "1" is maintained for "brillera" and the system will discount the match on "lera" and move through following endings until it encounters the match on ending 28 "era." Then, since the skip count was only 1, the system knows that this match is valid and returns a root of "brill" for appending the form endings.

c) Generic characters in endings

In some cases an ending may apply to word with some slight "customizing." Where this "customizing" follows a predictable pattern, it can be specified very generally in the ending list. For example, in English many verbs repeat their final consonant before adding -ing (running, batting, grabbing, etc.). Rather than defining separate ending list classes for each of these, the system will refer to a single list that has, among its other endings, -#ing which means a repeat of the consonant found at the end of the word. Now the verbs run, bat, grab, etc. can all refer to this single class. In the various languages supported there are many other different examples of this type.

d) Compaction techniques in the tables

There are several kinds of commonality and recurring patterns in the data which are used to full advantage. For example, the alphabetic characters used in the endings are assigned special codes based on frequency, so that the most frequent letters have the shortest codes. In addition, where words that are sequentially stored in the main dictionary have identical class data, a count is used rather than repeating the identical specification a number of times. Another example is the class number assignment, again the most frequent classes are assigned the lowest numbers to fit into the smallest possible number of bits. A technique used only in this table and not in the dictionary is "lick" encoding in which the minimal data size is two bits rather than a nibble of four bits. It was determined by experimentation that this approach would yield the best possible compaction for the particular type of data dealt with in these tables.

e) Symmetry of processing

In printed verb conjugation reference works for the various European languages, one can find the forms of a word by looking up the base word. matching will go as far left as necessary, which in the case of "went" means that the ending actually included the whole word. In the case of "gone" the ending -one left only "g" etc. But now the remaining words in the class can be constructed using the endings and whatever was left (which may be nothing at all) after matching.

g) Multiple spellings of the same form

In some cases, a given form of a word (such as past participle of a verb) may have two different spellings or realizations. This is seen commonly in English (consider the multiple spellings of past participles: bet/betted, pled/pleaded, wrapt/wrapped, dreamt/dreamed), and is even more frequent in certain European languages, such as Norwegian, which may have up to six different spellings of a single form of a single word. The morphological system can analyze and generate all the multiple spellings of a word, in all the supported languages.

h) Gender information

The positional ending list system specifies not only inflectional information for every form of a word, but also gender information (important for most European languages), if any is associated with word.

i) For certain words, a particular form may not exist (example: "snow" or "rain" do not have imperative forms: "rain!"). The system correctly analyzes these and will not generate nonexistent forms.

## 2. SYNONYMS

In order to find synonyms for a word one must find its "base" form because that is how thesauruses (thesauri?) are prepared. One can find an entry in a synonym dictionary for "buy," but you will not find one for "bought." When the user asks for a synonym for any form of a word, internally the synonym system will call the morphology system invention to determine the base word or base words.

Example 1: reading
Find the base forms read (verb) and reading (noun). Then go to the synonym dictionary and display:
synonyms for the verb "read":
understand, accept, apprehend, catch...
construe, interpret, take...
show, indicate, mark...
synonyms for the noun "reading":
interpretation, rendition, execution, performance, realization...

Example 2: wound
Go to the morphological system and determine the word wound has the following possible base forms:
wound(n)
wound(v)
wind(v)
Then go to the synonym dictionary with these base forms and display the following:
synonyms for the noun "wound":
trauma, injury, hurt...
synonyms for the verb "wound":
hurt, injure, shock...
synonyms for the verb "wind":
twist, coil, meander, snake, spiral, curl, entwine...
insinuate...

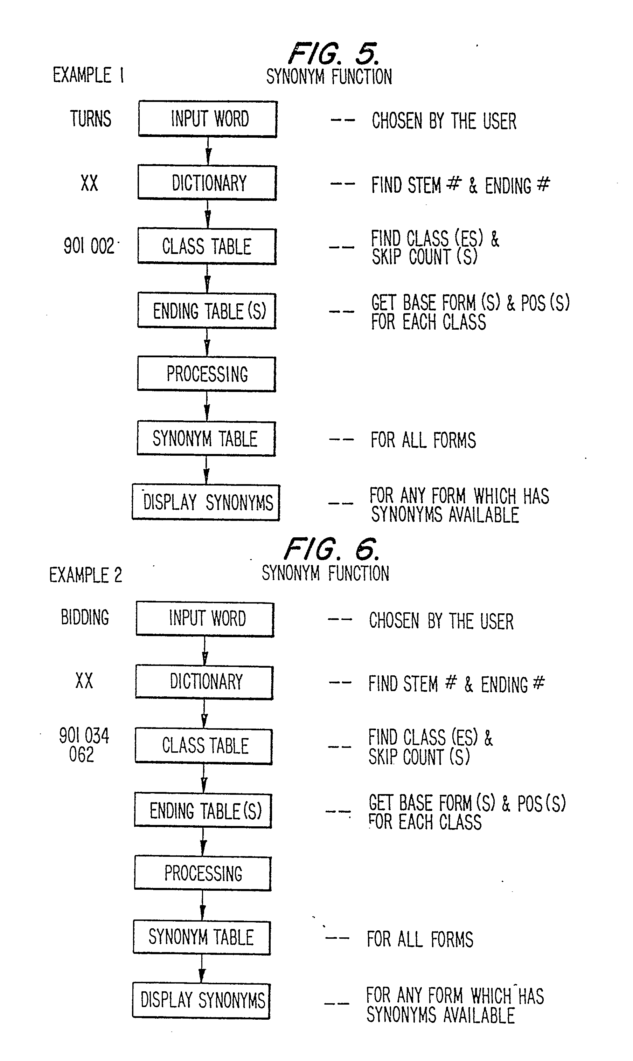

Without the morphological system, synonyms do not work at all for irregularly inflected words and they work incorrectly for some words where an inflected form of one word is a base form, and thus an entry, of another word ("becoming," for example, has synonyms = attractive, pretty... but there is no attempt to relate the word to the verb "become"). This sort of problem would be magnified several times for highly inflected languages (i.e. languages which have many forms of words). For for any synonym look-up without morphological aid, a large percentage of the time all that would be provided would be a message "no synonyms are available for xxxx," or an incomplete list could be delivered which might be unrelated to the word in the sentence in question. See Tables 4, 5 and 6 and the flow chart of Figs. 4, 5 and 6 for synonym processing.

**0 241 717**

SYNONYM FUNCTION

```
    input word                    -- chosen by the user
       |

    dictionary                    -- find stem# & ending#
       |

    class table                   -- find class(es) & skip count(s)
       |                             for the input word


    ending table(s)               -- get base form(s) & pos(s) for
       |                             each class

      processing***
       |
       |

    synonym table                 -- for all forms
       |

    display synonyms              -- for any form which has
                                     synonyms available
```

*** processing:
Take the input word and all possible base forms and take out dupes, resolve parts of speech and get the stem and ending numbers in the main dictionary in order to access the synonym table.

13

TABLE 4

EXAMPLE 1            .SYNONYM FUNCTION


```
turns       input word              -- chosen by the user
              |
xx          dictionary              -- find stem# & ending#
              |
901 002     class table             -- find class(es) &
                                       skip count(s)


              |

(below)     ending table(s)         -- get base form(s) & pos(s)
                                       for each class

              |
          processing***
              |
          synonym table             -- for all forms
              |
          display synonyms          -- for any form which has
                                       synonyms available
```

\*\*\* processing:
Look at 002 and 901 and find the base forms turn(v) and turn(n)
Now we have turns(n) or turns(v) and base forms turn(n) and turn(v). Resolving dupes and part of speech we have turns(nv) and turn(nv). We already got the stem & ending #'s for turns. Get it for turn and with both locations see if there are any synonym entries in the synonym shadow table. It turns out there are no synonyms for turns. We display the synonyms for the noun and the verb turn:
Synonyms for the verb "turn":
-circle, gyrate, revolve...
-bend, angle...
-reverse
-break, plow...
-sprain, wrench...
- avert, deflect,...
-change, alter, deflect
Synonyms for the noun "turn":
-revolution, circuit, gyration...
-bend, bow, crook, curvature, curve...
-shift, burst...
-movement, evolution...
-bout, go, hitch

14

TABLE 5

EXAMPLE 2                          SYNONYM FUNCTION


        bidding  input  word              -- chosen by the user
                    |

    XX       dictionary                   -- find stem# & ending#
                    |

    901 034 class table                   -- find class(es) &
    062                                       skip count(s)


                    |


    (below)  ending table(s)              -- get base form(s) & pos(s)
                                              for each class


                    |

        processing***
                    |

        synonym table                     -- for all forms
                    |

        display synonyms                   -- for any form which has
                                              synonyms available

*** processing:
Look at 901, 064 & 032 and find the base forms bidding(n) and bid(v) and bid(v)
Now we have bidding(v) or bidding(n) and base forms bidding(n) and bid(v) and bid(v). Resolving dupes and part of speech we have bidding(nv) and bid(v). We already got the stem & ending #'s for bidding. Get it for bid and with both locations to see if there are any synonym entries in the synonym shadow table. We display synonyms for the following:
Synonyms for the noun "bidding":
-command, charge, commandment...
-injunction, instruction, mandate, order
Synonyms for the verb "bid":
-invite, ask...
-go, offer...
-command, charge, direct...
(Note: There are synonyms for the noun bid but we will not display them.)


TABLE 6

    The synonym function will be superior to previous synonym processing because it can find all possible synonyms which are available in the associated thesaurus. Other systems are limited by using algorithms which can fail, not considering all possible parts of speech, not dealing with an extensive dictionary, not having a system which can be used for other languages and/or not having compaction.

## 3. OFFICE CORRESPONDENCE RETRIEVAL SYSTEM (OCRS)

The office correspondence retrieval system, which is in in multiple languages, requires morphological processing in three different parts of its process. (See USP 4,358,824 for background on OCRS.)

a) For indexing

The words in the text to be indexed are ranked by frequency to determine the significant or key words. If a word appears in various forms and the forms are not related to a base form then the score for that concept will be incorrectly diluted. For nouns, if a word appears half the time in the singular and half the time in the plural, with a total count of 12, the singular form will get a score of six and the plural form will get a score of six if they are not related through a morphological analysis. This of course becomes a more and more serious error when one deals with a language with many noun forms. The same reasoning of course applies to other parts of speech used for indexing.

Example:

"The General Construction Company is rebuilding our office. The office was rebuilt before in 1957 and in 1963 by other local companies. We would like to have General Construction rebuild the main entry, but they usually contract to another company for main entries and the subcontractor who rebuilds entries is not available."

In this paragraph there are several forms of the word rebuild: rebuilding, rebuilt, rebuild and rebuilds. If there is no morphological analysis these words will each get a score of one. If they are related to the base form "rebuild" then the indexing will show a score of four for that word and it will have a lot better chance of being recognized as a key word. The noun "company" appears twice in the singular and once in the plural. If "companies" is related to "company" then that noun will get a score of three, not two. The noun "entry" appears once in the singular and twice in the plural. If "entries" is associated with "entry" then the noun entry will have a score of three, not one. Once again, the morphological step is more and more important for languages having many forms of a word.

b) Synonyms

The importance of the morphological system for synonym retrieval inside of OCRS is the same as it is for synonyms as an independent function. If the words cannot be related to a base form, then synonyms cannot be found for a large percentage of words.

c) Retrieval

The user will enter a sentence to ask for information. The parser will do syntactic analysis of the sentence to determine part of speech. (See parser application of morphology below.) Then, to match the key words found from the query with the indexing for documents available, the morphological system will have to once again find the base form. Say the user enters the following:

"I would like information on companies who have rebuilt entries."

If the words are related to their base form, the search will look for documents with a significant score for the words "company," "rebuild" and "entry." Otherwise it will look for "companies," "rebuilt" and "entries" and will not find the example given above.

d) Parsing

The parser first finds the part of speech for words in the sentence is it analyzing and then tries to resolve ambiguities.

Example:

"The code to find the base form is in the morphological system."

code  can be noun or verb
to  can be adverb or preposition or infinitive marker
find  can be a verb or a noun
base  can be an adjective or a noun or a verb
form  can be a noun or a verb
"code" will be called a noun since it is preceded by "the."
"to" will be called an infinitive marker if it is followed by the infinitive form of a verb
find is the infinitive form of a verb
base will be called an adjective since it is after "the" and before another noun, etc. But if the sentence were:
"The code to finds the base form...."

The parser will see that "finds" is not the infinitive form, so it will call "to" a preposition and it will call "finds" a noun, the object of the preposition. In a more sophisticated stage, the parser will look for grammatical errors. It could be smart enough to recognize that "finds" is a mistake. Grammar checking will be an extension of the parser. It will have to locate the subject and verb (whether separated by several words or not) and then do a morphological analysis to see if they agree. In the attached "parser con" the parser finds the subject and verb and indicates disagreement, because "code" is a singular subject and "are" is a plural verb (disagreement in number) in the first case and "codes" is a plural subject and "is" is a singular verb (again, disagreement in number) in the second case. One prior art parser has morphological processing but it is external to the dictionary and is not compacted and could never find the correct possibilities because it only goes from inflected forms to base form, and not the other way. And it uses algorithms which are specific to English only. Its morphology only deals with nouns and verbs. So again, the inventive system is superior because it is: (1) compacted and built into the dictionary; (2) transportable to other languages; (3) bi-directional (the present morphological processing in the English parser could not find the forms of any word, only the base for some words); (4) error free --works for all peculiarities of each word and (5) comprehensive --for all parts of speech for all words in the dictionary.

Detailed Description of the Class Table and the Ending Table

1.0 Class Shadow Table

1.1 Class Indices

Header in front of 1st record

Bytes 0-1 = Number of 3-byte entries which follow in the index table

Bytes 2-3 = Reserved

Bytes 4-5 - Reserved

Bytes 5-7 = Reserved

Each entry

Bytes i-i+2 = Absolute stem number corresponding to the 1st class entry in each class table record (i = 8.11,...,LRECL-2);

If a 3-byte entry cannot fit in the remainder of a record, the record is padded with x'00' and the entry begins a new record. The last 3-byte entry in this table contains x'7fffff'. The last record is padded with x'00' to the end of the record.

1.2 Class Data

This table begins in the 1st record of the dictionary after the end of the class indices table. It contains class information for stem words and for suffix variants of stems that have class information differing from the stem. It also contains, for every class given, a skip count for the class endings table to prevent mismatches. Each entry in this table has the following format:

1. Class number(s) for the stem, each with the following format:

The class number entry is a minimum of six bits, with flags. The first nibble contains flags, interpreted as follows:

First nibble:'0xxx' means the following class is the last class for the stem.

'1xxx' means there are further classes for the stem.

'x1xx' means the skip count is greater than zero, and the nibble run length encoded skip count follows the class number entry.

'x0xx' means the skip count is zero for this class.

The remaining two bits in the first nibble are the class number, and if they are '11' then the next nibble is added. If the next nibble is '1111' the rest of the number if byte run-length-encoded.

2. Class number(s) for the variants, each with the following format:

First nibble: '00xx' means only and all the stem's classes apply to this variant. In this case a nibble run-length encoded count of the number of such defaulting variants follows.

'01xx' means all the stem's information and the following class(es), encoded as for the stem, starting with the next nibble, are to be used.

'1xxx' means none of the stem's class information is to be used. In this case, class information for the variant follows, starting with the next nibble, encoded as for the stem.

'xx0x' means this is the last variant for which exception class information is given.

'xx1x' means that the current variant is not the last variant for which exception class information is given.

17

'0000' means either all variants default exactly to stem's class information, or the stem has no variants at all. (The distinction is clear to the processing code, because the variant number is known when the entry is accessed.)

Note: The nibble described is the "variant flag" nibble. If the last bit of this nibble (always 'x' above) is ever one, then the nibbles following the variant flag are a nibble-run-length-encoded count of succeeding variants which have exactly the same characteristics as the current variant (which the variant flag is explicitly given). This count must always be greater than zero. If the next variant on the current stem cannot default to its predecessor, the last bit in the variant flag nibble will be zero, and the count will not be present. (The next nibble will then be a variant flag.) If an entry cannot fit in the remainder of a record, the record is padded with x'00' and the entry begins in the next record. The last record is padded with x'00'.

Ending Table Component of the Morphological Analysis System

1. Index:
Index header -
Count of end index entries (2 bytes)
Count of grammar codes (2 bytes)
Count of end INDEX blocks (2 bytes)
Reserved (2 bytes)
Index entries - (One index entry for each ending list)
Starting block number (2 bytes)
Offset in starting block (2 bytes)
Notes:

1. The index is arranged by frequency of the class assignment correlating exactly with the class number assignment used in the class shadow table build. These must be consistent.

2. An index entry will be present for every class, whether or not it uses a default ending list. If, however, the class defaults to some other class, the index entry for defaulting class is structured as follows: Starting block number = 0. If Starting block number = 0, the next 2 bytes are the class number (used directly to reaccess the end table index) of the class to which the current class defaults.

3. The grammar codes are stored just following the index header, and before the actual index entries described above. The number of codes is given in the index header. The codes are each eight bytes, the same length as an actual index entry, however the last byte of this is set to the part-of-speech code for the class.

2. Ending Table Data:
Header for each ending list: (pointed to by the block and offset numbers given by the index)
Starting block of form list (2 bytes) @R1
Offset in block of form list (2 bytes) @R1
Grammar code number (2 bytes)
Forms count (2 bytes)
Explicit endings count (2 bytes)
Template index number (2 bytes) Ending character strings:
These immediately follow the header. The ending character strings start and end on a byte boundary, but the letters themselves are frequency encoded according to the letter compaction table in the main dictionary. The ending list is the only place in the ending tables where nibble encoding is used. Each separate ending is preceded by a nibble run-length-encoded length (length is number of characters in the uncompacted ending). Note that between the header and the start of the ending list, or between any two complete endings, a block boundary may be crossed.

Forms list:
Immediately following the ending character strings for a list, (note that a block boundary may be crossed) is the start of the forms list pointed to explicitly by the forms block number and forms offset number fields in each class's index entry. Since all classes have been merged, and those that default to another class no longer exist except at index entries, the forms list must identify which of the classes which use this current class as a default have forms in the list.

The forms list is made up of:
-Form numbers

18

-Ending list id numbers
-Ending list pointers (pointers to character strings)

Form numbers:
The class table and ending table input use form numbers.

Ending list id numbers:
Because several "shadow" or defaulting classes, which have no existence in the compacted table except as index entries, may refer to a "full" class, the ending list id numbers precede ending-list pointers that apply only to a given defaulting class.

Ending list pointers:
These numbers refer to character strings in the ending character string lists described above.

Form numbers 63-256-256... run length encoding.
 First two bits are flag '00'x.
Ending list id numbers 63-256-256... run length encoding.
First two bits are flag '01'x.
Ending list pointers 63-256-256... run length encoding.
First two bits are flag '10'x if last pointer for the form, '11'x otherwise.

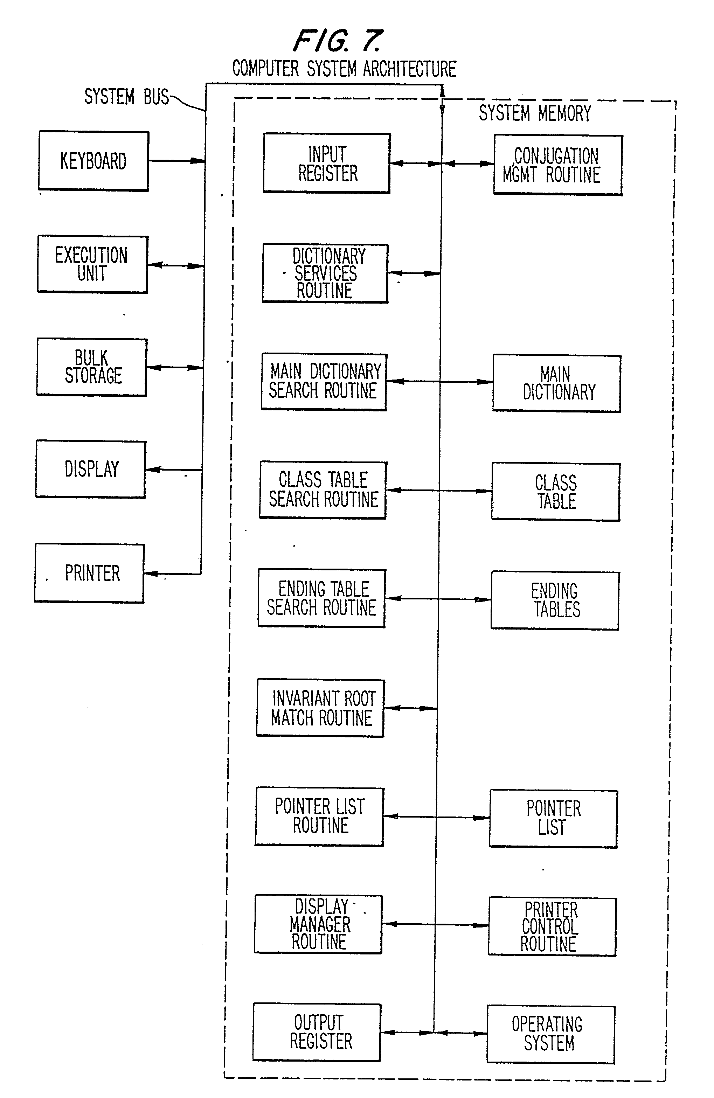

Fig. 7 is a computer system architecture diagram of the invention, featuring the organization of the system memory to store the various routines, tables, dictionary and lists described above. The system includes a keyboard for inputting the input word. The execution unit executes the instructions in the various routines stored in the system memory. The bulk storage initially loads the various routines, tables, lists, etc. into the system memory and can store auxiliary data bases, as necessary. The display and printer are standard output devices for displaying the output from the output register. The execution unit, bulk storage and input/output devices transfer data and instructions over the system bus to and from the various routines, tables and lists shown in the system memory, to carry out the processes described above.

The resulting linguistic analysis method and apparatus enables the user to relate and identify all the words in a dictionary, in an improved manner. The resultant invention has the improved features of bi-directionality, superior data compaction, a very comprehensive collection of words which are capable of storage in a relatively small storage area, and error-proof deterministic patterns for organizing the analysis data. The resultant invention is applicable to all indo-European languages.

Although a specific embodiment of the invention has been disclosed, it will be understood by those of skill in the art that some changes can be made to the form and details of the disclosed embodiment without departing from the spirit and the scope of the invention.

**Claims**

1. A computer method for relating and identifying words, comprising:

matching an input word with words stored in a class table and identifying the corresponding class number for the input word;

accessing an inflection pattern table corresponding to said class number;

matching the input word with word segments stored in said inflection pattern table until a successful match is achieved;

identifying the grammatical form of the input word from the relative position of the successfully matched word portion in said inflection pattern table;

identifying the invariant root portion of the input word as the remaining portion of the input word after removing said matched word portion found from said inflection pattern table;

whereby an improved linguistic analysis technique is achieved.

2. The method of claim 1 wherein said linguistic analysis technique is applied to the generation of synonyms.

3. The method of claim 1 wherein said linguistic analysis technique is applied to the classification of a document.

4. The method of claim 3 wherein said linguistic analysis technique is applied to the retrieval of a document which has undergone said document classification.

5. The method of claim 1 wherein said linguistic analysis technique is applied to grammar checking.

6. The method of claim 1 wherein said linguistic analysis technique is applied to parsing operations.

7. In a computer system including an input means, a system memory, an execution unit and an output means mutually interconnected by a system bus, an apparatus for relating and identifying words, comprising:

means connected to said system bus for matching an input word with words stored in a class table in said memory and identifying the corresponding class number for the input word;

means connected to said system bus for accessing an inflection pattern table in said memory corresponding to said class number;

means connected to said system bus for matching the input word with word segments stored in said inflection pattern table until a successful match is achieved;

means connected to said system bus for identifying the grammatical form of the input word from the relative position of the successfully matched word portion in said inflection pattern table;

means connected to said system bus for identifying the invariant root portion of the input word as the remaining portion of the input word after removing said matched word portion found from said inflection pattern table;

whereby an improved linguistic analysis technique is achieved.

8. The apparatus of claim 7, which further comprises:

means connected to said system bus and operating on said invariant root portion of the input word, for generating all of the grammatical forms of the input word.

# *FIG. 1.*
## FORMS FUNCTION

| | |
|---|---|
| INPUT WORD | -- CHOSEN BY THE USER |
| DICTIONARY | -- FIND STEM # & ENDING # |
| CLASS TABLE | -- FIND CLASS (ES) & SKIP COUNT(S) FOR THE INPUT WORD |
| ENDING TABLE(S) | -- GET ALL BASE FORMS & POS FOR EACH CLASS ✳✳✳ |

> 1 BASE FORM ? — YES → INTERMEDIARY SCREEN WITH ALL BASE FORMS → USER SELECTS ONE → DISPLAY ALL FORMS

NO → DISPLAY ALL FORMS

✳✳✳ TO FIND BASE FORMS:
MATCH ENDINGS IN THE ENDING TABLE (S) IDENTIFIED BY THE CLASS TABLE FOR A GIVEN WORD. WHEN AN ENDING MATCHES (CONSIDERING SKIP COUNT), TAKE THE LEFTOVER FRONT PART OF THE WORD (THE "STEM") AND ADD THE ENDING FOR THE FIRST EXISTING FORM.

## FIG. 2.
### FORMS FUNCTION

EXAMPLE:

WOUND  [ INPUT WORD ]  -- CHOSEN BY THE USER

XXX  [ DICTIONARY ]  -- FIND STEM # & ENDING #

901 002  [ CLASS TABLE ]  -- FIND CLASS (ES) & SKIP COUNT (S)
& 069    FOR THE INPUT WORD

[ ENDING TABLE (S) ]  -- GET ALL BASE FORMS & POS
FOR EACH CLASS X X X

>1 BASE FORM ?  YES ──→  WOUND (n)
                                            WOUND (v)
                                            WIND (v)

NO

[ DISPLAY ALL FORMS ] ←── [ USER SELECTS ONE ]

X X X TO FIND BASE FORMS:

| 002 | (EV) | | 069 | (EV) | | 901 | (EN) |
|-----|------|----|-----|--------|----|-----|------|
| 01 | | 01 | i#% | | 01 | | |
| 02 | s | 02 | i#% | | 02 | s | |
| 03 | ed | 03 | ou#% | | | | |
| 04 | ing | 04 | i#%ing | | | | |
| 05 | ed | 05 | ou#% | | | | |

## FIG. 4.
### SYNONYM FUNCTION

[ INPUT WORD ]  -- CHOSEN BY THE USER

[ DICTIONARY ]  -- FIND STEM # & ENDING #

[ CLASS TABLE ]  -- FIND CLASS (ES) & SKIP COUNT (S)
FOR THE INPUT WORD

[ ENDING TABLE (S) ]  -- GET BASE FORM (S) & POS (S)
FOR EACH CLASS

[ PROCESSING ✱✱✱ ]

[ SYNONYM TABLE ]  -- FOR ALL FORMS

[ DISPLAY SYNONYMS ]  -- FOR ANY FORM WHICH HAS
SYNONYMS AVAILABLE

✱✱✱ PROCESSING:
TAKE THE INPUT WORD AND ALL POSSIBLE BASE FORMS AND TAKE OUT DUPES, RESOLVE PARTS OF SPEECH AND GET THE STEM AND ENDING NUMBERS IN THE MAIN DICTIONARY IN ORDER TO ACCESS THE SYNONYM TABLE.

## FIG. 3.

```
                    FROM INPUT
                         │
                         ▼
               ┌───────────────────┐
               │   INPUT  WORD     │◄──────────────┐
               └───────────────────┘               │
                 STRING  │                          │
                         ▼                          │
               ┌───────────────────┐               │
               │    DICTIONARY     │◄──────────────┤
               │  SERVICES ROUTINE │               │
               └───────────────────┘               │
           STEM & ENDING │                          │
                         ▼                          │
               ┌───────────────────┐               │
               │  MAIN  DICTIONARY │◄──────────────┤
               │  SEARCH ROUTINE   │               │
               └───────────────────┘               │
                  INDEX  │                          │
                         ▼                          │
               ┌───────────────────┐               │
               │  CLASS IDENTIFIER │◄──────────────┤
               │TABLE SEARCH ROUTINE│              │
               └───────────────────┘               │         ┌────────────────────┐
                  CLASS  │                          │◄───────►│  CONJUGATION AID   │
                         ▼                          │         │ MANAGEMENT ROUTINE │
               ┌───────────────────┐               │         └────────────────────┘
               │   ENDING TABLES   │◄──────────────┤
               │  SEARCH ROUTINE   │               │
               └───────────────────┘               │
             ENDING LIST │                          │
                         ▼                          │
               ┌───────────────────┐               │
               │  INVARIANT ROOT   │◄──────────────┤
               │  MATCH ROUTINE    │               │
               └───────────────────┘               │
         INVARIANT ROOT  │                          │
                         ▼                          │
               ┌───────────────────┐               │
               │   POINTER LIST    │◄──────────────┤
               │     ROUTINE       │               │
               └───────────────────┘               │
           WORD FORMS    │                          │
                         ▼                          │
               ┌───────────────────┐               │
               │  DISPLAY MANAGER  │◄──────────────┘
               │     ROUTINE       │
               └───────────────────┘
                         │
                         ▼
                   TO DISPLAY
```

## *FIG. 5.*

EXAMPLE 1         SYNONYM FUNCTION

| | | |
|---|---|---|
| TURNS | INPUT WORD | -- CHOSEN BY THE USER |
| XX | DICTIONARY | -- FIND STEM # & ENDING # |
| 901 002 | CLASS TABLE | -- FIND CLASS (ES) & SKIP COUNT (S) |
| | ENDING TABLE (S) | -- GET BASE FORM (S) & POS (S) FOR EACH CLASS |
| | PROCESSING | |
| | SYNONYM TABLE | -- FOR ALL FORMS |
| | DISPLAY SYNONYMS | -- FOR ANY FORM WHICH HAS SYNONYMS AVAILABLE |

## *FIG. 6.*

EXAMPLE 2         SYNONYM FUNCTION

| | | |
|---|---|---|
| BIDDING | INPUT WORD | -- CHOSEN BY THE USER |
| XX | DICTIONARY | -- FIND STEM # & ENDING # |
| 901 034 062 | CLASS TABLE | -- FIND CLASS (ES) & SKIP COUNT (S) |
| | ENDING TABLE (S) | -- GET BASE FORM (S) & POS (S) FOR EACH CLASS |
| | PROCESSING | |
| | SYNONYM TABLE | -- FOR ALL FORMS |
| | DISPLAY SYNONYMS | -- FOR ANY FORM WHICH HAS SYNONYMS AVAILABLE |

## *FIG. 7.*

COMPUTER SYSTEM ARCHITECTURE

SYSTEM BUS

SYSTEM MEMORY

KEYBOARD

EXECUTION UNIT

BULK STORAGE

DISPLAY

PRINTER

INPUT REGISTER

DICTIONARY SERVICES ROUTINE

MAIN DICTIONARY SEARCH ROUTINE

CLASS TABLE SEARCH ROUTINE

ENDING TABLE SEARCH ROUTINE

INVARIANT ROOT MATCH ROUTINE

POINTER LIST ROUTINE

DISPLAY MANAGER ROUTINE

OUTPUT REGISTER

CONJUGATION MGMT ROUTINE

MAIN DICTIONARY

CLASS TABLE

ENDING TABLES

POINTER LIST

PRINTER CONTROL ROUTINE

OPERATING SYSTEM

MA 985 004